# EUROPÄISCHE PATENTSCHRIFT

(11) **EP 0 710 843 B1**
(45) Veröffentlichungstag und Bekanntmachung des Hinweises auf die Patenterteilung: **16.04.1997**
(21) Anmeldenummer: 95116081.1
(22) Anmeldetag: 12.10.1995
(51) Int. Cl.: G01P 15/08, G01P 15/125

(54) **Kapazitiver Beschleunigungssensor**
Capacitive acceleration sensor
Capteur d'accélération capacitif

(30) Priorität: 03.11.1994 DE 4439238
(43) Veröffentlichungstag der Anmeldung: 08.05.1996
(73) Patentinhaber: TEMIC TELEFUNKEN microelectronic GmbH, 74072 Heilbronn (DE)
(72) Erfinder: Schuster, Günther, Dr., D-73108 Gammelshausen (DE); Nothelfer, Udo, D-89278 Nersingen (DE)
(74) Vertreter: Maute, Hans-Jürgen, Dipl.-Ing.

(56) Entgegenhaltungen:
- EP-A- 0 591 554
- EP-A- 0 601 923
- EP-A- 0 605 300
- EP-A- 0 618 450
- WO-A-93/19343
- DE-A- 3 611 360

## Beschreibung

Die Erfindung betrifft einen kapazitiven Beschleunigungssensor mit planarem Aufbau nach dem Oberbegriff des Anspruchs 1. Kapazitive Beschleunigungssensoren werden beispielsweise in einem Fahrzeug zur Fahrwerksregelung oder als Aufprallsensor zur Auslösung von Schutzeinrichtungen wie Airbags eingesetzt.

Ein derartiger Sensor zur selbsttätigen Auslösung von Insassenschutzvorrichtungen ist aus der Druckschrift DE-A-3 611 360 bekannt. Bei diesem Sensor besteht das Gehäuse aus einem Silizium-Plättchen, aus dem mittels Ätztechnik zwei gleiche Pendel mit asymmetrisch ausgebildeten Drehmassen ausgearbeitet sind. Dadurch kann bei einer relativ niedrigen Resonanzfrequenz der Kippwinkel in zwei Richtungen bestimmt werden.

Einen kapazitiven Beschleunigungssensor, bei dem eine freitragende Struktur senkrecht zur Fläche eines Halbleiterkörpers beweglich ist, beschreibt die Druckschrift EP-A-0601923. Durch diese Anordnung können Beschleunigungen detektiert werden, die ebenfalls senkrecht zur Fläche des Halbleiterkörpers stehen.

Bekannt sind auch Beschleunigungssensoren, die nach dem piezoelektrischen oder piezoresistiven Prinzip arbeiten. Meßanordnungen nach dem piezoelektrischen Prinzip benötigen jedoch eine recht hohe Eingangsimpedanz, um das ziemlich schwache Signal eines piezoelektrischen Sensors auswerten zu können und sind deshalb beispielsweise gegenüber elektrostatischen Störungen empfindlich. Im Gegensatz zu Meßanordnungen nach dem piezoresistiven Prinzip können damit zudem keine statischen oder niederfrequenten Beschleunigungsvorgänge gemessen werden. Piezoresistive Sensoren zeigen eine große Temperaturabhängigkeit der Empfindlichkeit und der Offsetspannung; hinzu kommt, daß ihre Herstellung kompliziert und teuer ist.

Kapazitive Beschleunigungssensoren weisen demgegenüber mehrere Vorteile auf, wodurch sie sich für den Einsatz insbesondere in einem Fahrzeug eignen. So sind sie erstens in der Lage, statische und niederfrequente Beschleunigungen erfassen zu können, zweitens sind sie vergleichsweise unempfindlich gegenüber Temperaturschwankungen und drittens ist ihr sogenannter Dehnungsfaktor größer als der von piezoresistiven Sensoren, was eine größere Empfindlichkeit bzw. einen größeren Meßbereich zur Folge hat.

Als kapazitive Beschleunigungsmesser sind auch sogenannte Bulk-Beschleunigungssensoren bekannt, die aber mit einem aufwendigen Verfahren hergestellt werden. Zudem sind zur Herstellung eines solchen Bulk-Beschleunigungssensors üblicherweise drei Wafer notwendig, so daß derartige Beschleunigungssensoren aufgrund hoher Material- und Herstellkosten recht teuer sind, was ihrer Verwendung etwa in Kleinwagen als Sensor zur Auslösung eines Insassenschutzsystems hinderlich ist.

Es ist Aufgabe der Erfindung, einen kapazitiven Beschleunigungssensor mit planarem Aufbau anzugeben, der kostengünstig hergestellt werden kann.

Die Lösung dieser Aufgabe stellt ein kapazitiver Beschleunigungssensor dar, mit planarem Aufbau und einer in einem Hohlraum angeordneten beweglichen freitragenden Struktur zur Änderung der Kapazität, wobei der Beschleunigungssensor aus zwei Halbleiterkörper besteht, wenigstens einer der beiden Halbleiterkörper eine Grube einer ersten Art aufweist, wenigstens einer der Halbleiterkörper eine Grube zweiter Art mit einer freitragenden Struktur, die bezüglich des Halbleiterkörpers beweglich angeordnet ist, aufweist, und beide Halbleiterkörper flächig miteinander verbunden und derart angeordnet sind, daß eine Grube der ersten Art des einen Halbleiterkörpers und eine Grube der zweiten Art des anderen Halbleiterkörpers zusammen einen Hohlraum bilden. Weiterhin weist der kapazitive Beschleunigungssensor folgende Merkmale auf:
- beide Halbleiterkörper weisen wenigstens eine Grube der ersten Art auf,
- beide Halbleiterkörper weisen wenigstens eine Grube der zweiten Art auf, in der die freitragende Struktur derart angeordnet und mit dem Halbleiterkörper verbunden ist, daß sie senkrecht zur Fläche der beiden Halbleiterkörper frei beweglich ist und
- bei einem der beiden Halbleiterkörper sind die Gruben der ersten Art von den Gruben der zweiten Art mittels eines Sägegrabens elektrisch voneinander getrennt.

Vorteilhafte Weiterbildungen der Erfindung sind in den abhängigen Ansprüchen gekennzeichnet.

Die Vorteile der Erfindung bestehen insbesondere darin, daß durch das Zusammenfügen von identischen Halbleiterkörpern ein robuster Beschleunigungssensor entsteht, der keine zusätzliche Abdeckung zum Schutz vor Umwelteinflüssen benötigt. Durch diese Anordnung brauchen weniger unterschiedliche Teile und können mehr gleichartige Teile hergestellt werden, was zu einer spürbaren Verringerung der Herstellkosten führt.

Ein Ausführungsbeispiel der Erfindung ist in den Figuren dargestellt und wird nachfolgend erläutert.

Es zeigen:
- Figur 1a: einen Halbleiterkörper mit einer Grube erster Art in Draufsicht,
- Figur 1b: einen Halbleiterkörper mit einer Grube zweiter Art mit freitragender Struktur in Draufsicht,
- Figur 1c: einen Halbleiterkörper mit jeweils einer Grube erster und zweiter Art in Draufsicht,
- Figur 2a: den Halbleiterkörper der Figur 1a im Schnitt,
- Figur 2b: den Halbleiterkörper der Figur 1b im Schnitt,
- Figur 2c: den Halbleiterkörper der Figur 1c im Schnitt,
- Figur 3a: zwei Halbleiterkörper mit Hohlraum und freitragender Struktur im Schnitt,
- Figur 3b: zwei Halbleiterkörper mit zwei Hohlräumen und zwei freitragenden Strukturen im Schnitt,
- Figur 4a: den Halbleiterkörper der Figur 3a in perspektivischer Darstellung,
- Figur 4b: die Halbleiterkörper der Figur 3b in perspektivischer Darstellung,
- Figur 5a: das Schaltbild einer Auswerteschaltung für einen Beschleunigungssensor nach Figur 4a,
- Figur 5b: das Schaltbild einer Auswerteschaltung für einen Beschleunigungssensor nach Figur 4b,
- Figur 6: reale freitragende Struktur in Draufsicht und
- Figur 7: aufgebauter und gebondeter doppelter schleunigungssensor nach Figur 4b.

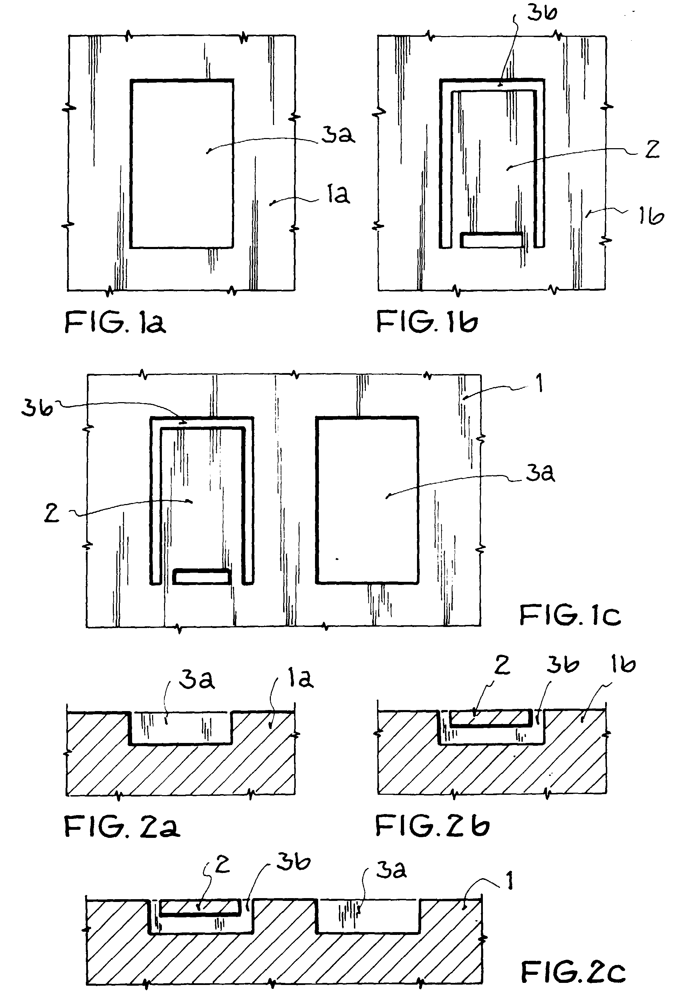

Einen Halbleiterkörper 1a mit einer eingebrachten Grube erster Art 3a zeigen die Figuren 1a und 2a. Als Grundmaterial für die Halbleiterkörper 1 kann Silizium verwendet werden, falls das unter dem Aktenzeichen P 44 21 337.9 (veröffentlicht als DE 442 1337) angemeldete Verfahren zur Herstellung von quasiplanaren, freitragenden Strukturen verwendet wird; ansonsten wird käufliches SOI (Silicon-On-Insulator) empfohlen. Zwecks hoher Leitfähigkeit ist eine Grunddotierung vom n-Typ mit etwa N = 10¹⁸ cm⁻³ erforderlich. Zur weiteren Verringerung des seriellen Widerstandes ist gegebenenfalls im Bereich des späteren Metall-Halbleiter-Übergangs eine zusätzliche Dotierung notwendig.

Ein Halbleiterkörper 1b mit eingebrachter Grube zweiter Art 3b und mit dem Halbleiterkörper 1b an der Oberkante der Grube 3b verbundener freitragender Struktur 2 ist in den Figuren 1b und 2b dargestellt.

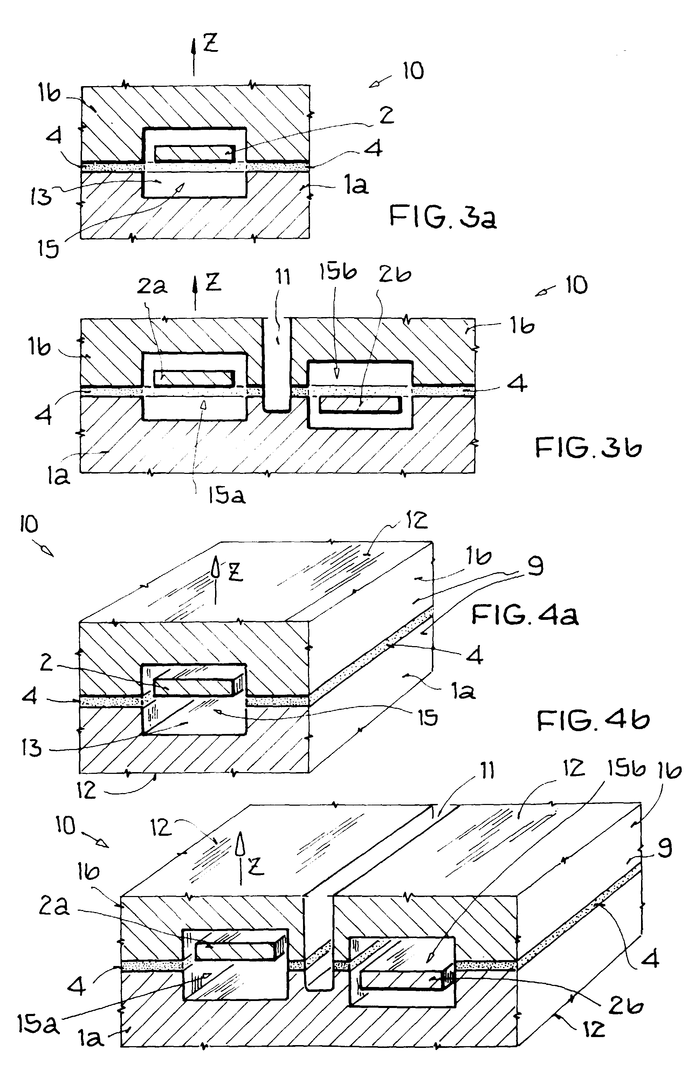

Die Figuren 1c und 2c zeigen einen Halbleiterkörper 1 mit eingebrachter Grube erster Art 3a und zweiter Art 3b einschließlich der freitragenden Struktur 2. Die Figuren 3a und 4a zeigen einen "einfachen" Beschleunigungssensor 10, bestehend aus einem Halbleiterkörper 1a und einem Halbleiterkörper 1b, die mittels einer Schicht 4 verbunden und derart angeordnet sind, daß sich aus den Gruben 3 (Figur 2a, 2b) beider Halbleiterkörper 1a und 1b ein quaderförmiger (schachtelförmiger) Hohlraum 13 ergibt, in dem sich die freitragende Struktur 2 senkrecht zur Fläche der Halbleiterkörper 1 bewegen kann. Dadurch entsteht ein elektrischer Kondensator 15. Die Schicht 4, die vorzugsweise aus thermisch gewachsenem Oxyd besteht, hat die Aufgabe, zwei Halbleiterkörper 1 mechanisch miteinander zu verbinden und elektrisch voneinander zu isolieren. Da sie eine parasitäre Kapazität darstellt, muß ihre Dicke unter Beachtung einer ausreichenden mechanischen Verbindungsfestigkeit möglichst klein gehalten werden, wobei derzeit eine Isolierdicke von 3 µm technisch machbar ist. Grundsätzlich können auch andere Isolatoren wie z. B. Si₃N₄ verwendet werden.

Die Halbleiterkörper 1a und 1b sind an allen den Stellen miteinander verbunden (gebondet), an denen sie sich bei der Montage berühren. Vorteilhaft geschieht dies in einem als "Wafer-Direct-Bonding" bezeichneten Verfahren, das auch als Hochtemperatur-Bonding bei hohen Temperaturen von z. B. 1000 °C ausgeführt werden kann, so lange auf die Halbleiterkörper 1a und 1b noch kein Metall aufgebracht ist. Sind die Halbleiterkörper 1a und 1b bereits mit Metall beschichtet, wird das Niedertemperatur-Bonding angewandt.

Einen "doppelten" Beschleunigungssensor 10 gemäß der Erfindung, der aus zwei gleichen, in Figur 1c und 2c dargestellten Halbleiterkörpern 1 besteht, zeigen die Figuren 3b und 4b, wobei eine Schicht 4 die beiden Halbleiterkörper 1 mechanisch miteinander verbindet und elektrisch voneinander isoliert. Ein Sägegraben 11 trennt den Halbleiterkörper 1b in zwei Hälften, so daß daraus zwei elektrisch voneinander isolierte Kondensatoren 15a und 15b entstehen.

Wirkt auf einen solchen "doppelten" Beschleunigungssensor 10 eine Beschleunigung in Z-Richtung, bewegen sich die trägen Massen der freitragenden Strukturen 2a und 2b in die entgegengesetzte Richtung -Z. Da die freitragende Struktur 2a elektrisch z. B. mit dem Halbleiterkörper 1a und die freitragende Struktur 2b mit dem Halbleiterkörper 1b verbunden ist, weisen die Kapazitätsänderungen der beiden Kondensatoren 15a und 15b ein unterschiedliches Vorzeichen auf. Beispielsweise vergrößert sich die Kapazität des Kondensators 15a, bedingt durch einen verringerten Abstand zwischen der freitragenden Struktur 2a und dem Halbleiterkörper 1a, während sich die Kapazität des Kondensators 15b verkleinert, hervorgerufen durch einen vergrößerten Abstand zwischen der freitragenden Struktur 2b und dem Halbleiterkörper 1b. Die Kapazitätsänderungen der Kondensatoren 15a und 15b liegen hierbei im Bereich von 20 % bis 50 % ihrer Nominalkapazität. Je kleiner die Änderung, desto linearer ist das Signal über den vollen Meßbereich.

Um die beiden Halbleiterkörper 1a und 1b genau positionieren zu können, sind die Oberflächen 12 strukturiert. Diese Struktur kann vorteilhaft mittels eines doppelseitigen Fotolackschrittes aufgebracht werden; sie bildet gleichzeitig den Sägegraben 11 ab. Es ist jedoch auch möglich, die Justage mit Hilfe eines Durchsicht-Infrarotmikroskops vorzunehmen; in diesem Fall können die Justiermarken auf den Oberflächen 12 entfallen. Zur späteren Kontaktierung des Beschleunigungssensors 10 werden dessen Kontaktflächen 12 mit Aluminium beschichtet.

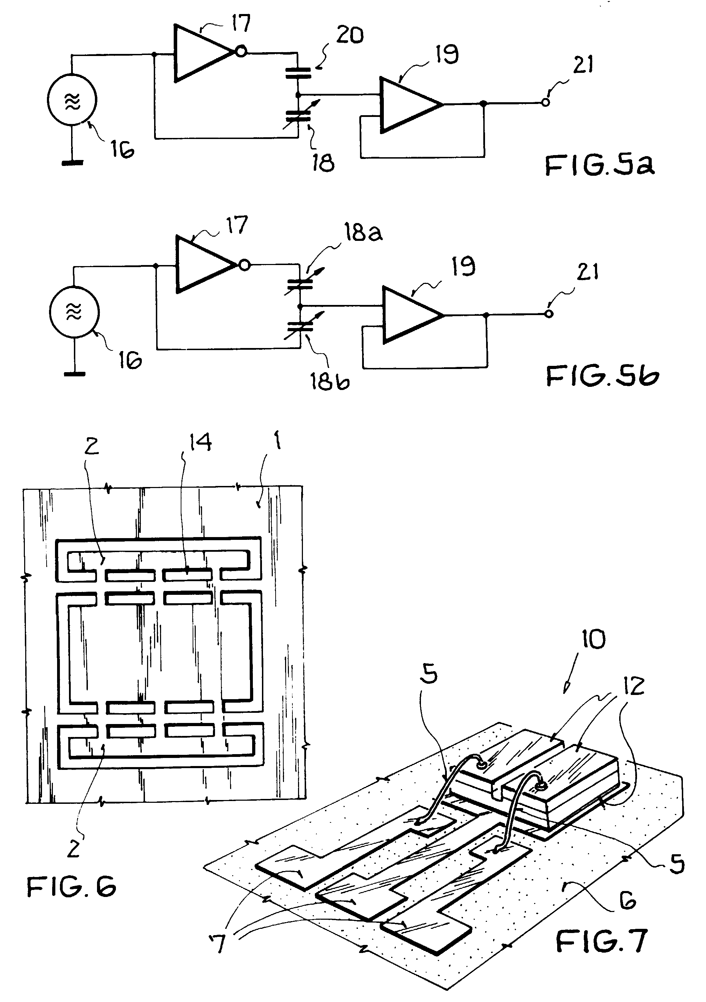

Figur 5a zeigt eine mögliche Beschaltung eines "einfachen" kapazitiven Beschleunigungssensors, bestehend aus einem HF-Generator 16, einem Inverter 17, einer Kapazität 20 und einem Verstärker 19. Die veränderliche Kapazität 18 stellt hierbei den kapazitiven Beschleunigungssensor dar. Bei der Beschaltung eines "einfachen" Beschleunigungssensors ist zu beachten, daß das dem Schaltungspunkt 21 zugeführte Auswertesignal temperaturabhängig ist und zusätzlich kompensiert werden muß.

Die in Figur 5b dargestellte Schaltungsanordnung stimmt im wesentlichen mit der in Figur 5a dargestellten überein und zeigt eine mögliche Beschaltung eines "doppelten" Beschleunigungssensors. Die Kondensatoren 18a und 18b stellen hierbei die sich mit unterschiedlichem Vorzeichen ändernden Kapazitäten der beiden Kondensatoren eines "doppelten" kapazitiven Beschleunigungssensors dar. Bewirkt durch die mit unterschiedlichen Vorzeichen bei einer Beschleunigung sich ändernden Kapazitäten wird eine Temperaturänderung innerhalb eines "doppelten" Beschleunigungssensors kompensiert.

Figur 6 zeigt, wie die in Figur 1b und 1c symbolisch dargestellten freitragenden Strukturen 2 in Wirklichkeit aussehen. Hierbei ist die freitragende Struktur 2 an vier Stellen mit dem sie umgebenden Halbleiterkörper 1 verbunden. Diese Maßnahme vereinfacht den Herstellprozeß und sorgt zudem für eine Linearisierung des gangssignales. Mehrere Durchbrüche 14 ermöglichen bei der Herstellung eine schnelle Unterätzung mit der Folge, daß unerwünschte Unterätzungen außerhalb der Fläche der freitragenden Struktur 2 gering gehalten werden können.

Figur 7 zeigt einen aufgebauten und kontaktierten kapazitiven Beschleunigungssensor 10. Der Sensor 10 kann beispielsweise, wie gezeigt, auf eine Leiterplatte 6 mit aufgebrachten Leitbahnen 7, auf ein Substrat oder auf ein wie immer geartetes Gehäuse geklebt werden. Die Verbindung zwischen Sensor 10 und Leitbahn 7 muß elektrisch leitend sein und wird üblicherweise mit leitfähigem Epoxykleber ausgeführt; die Verbindung zwischen den mit Aluminium beschichteten Flächen 12 und den Leitbahnen 7 der Leiterplatte 6 erfolgt beispielsweise mittels Bonddrähten 5.

Der erfindungsgemäße kapazitive Beschleunigungssensor eignet sich besonders als Teil der Auslöseeinheit für Insassenschutzeinrichtungen in Kraftfahrzeugen, aber auch für alle Anwendungen, bei denen statische und niederfrequente Beschleunigungsvorgänge gemessen werden müssen.

## Patentansprüche

1. Kapazitiver Beschleunigungssensor (10) mit planarem Aufbau und einer in einem Hohlraum (13) angeordneten beweglichen freitragenden Struktur (2) zur Änderung der Kapazität, insbesondere zum Einsatz in einem Fahrzeug, wobei der Beschleunigungssensor (10) aus zwei Halbleiterkörper (1a, 1b) besteht, wenigstens einer der beiden Halbleiterkörper (1a, 1b) eine Grube einer ersten Art (3a) aufweist, wenigstens einer der Halbleiterkörper (1a, 1b) eine Grube zweiter Art (3b) mit einer freitragenden Struktur (2), die bezüglich des Halbleiterkörpers (1a, 1b) beweglich angeordnet ist, aufweist, und beide Halbleiterkörper (1a, 1b) flächig miteinander verbunden und derart angeordnet sind, daß eine Grube der ersten Art (3a) des einen Halbleiterkörpers (1a) und eine Grube der zweiten Art (3b) des anderen Halbleiterkörpers (1b) zusammen einen Hohlraum (13) bilden, **gekennzeichnet durch folgende Merkmale:**
a) beide Halbleiterkörper (1a, 1b) weisen wenigstens eine Grube der ersten Art (3a) auf;
b) beide Halbleiterkörper (1a, 1b) weisen wenigstens eine Grube der zweiten Art (3b) auf, in der die freitragende Struktur (2a, 2b) derart angeordnet und mit dem Halbleiterkörper (1a, 1b) verbunden ist, daß sie senkrecht zur Fläche der beiden Halbleiterkörper (1a, 1b) frei beweglich ist;
c) bei einem der beiden Halbleiterkörper (1a, 1b) sind die Gruben der ersten Art (3a) von den Gruben der zweiten Art (3b) mittels eines Sägegrabens (11) elektrisch voneinander getrennt.

2. Kapazitiver Beschleunigungssensor nach Anspruch 1, dadurch gekennzeichnet, daß die freitragende Struktur (2a, 2b) einer Grube der zweiten Art (3b) in der Nähe der Verbindungsstelle der beiden Halbleiterkörper (1a, 1b) angeordnet ist.

3. Kapazitiver Beschleunigungssensor nach Anspruch 2 oder 3, dadurch gekennzeichnet, daß die freitragende Struktur (2a, 2b) flächig mit dem Halbleiterkörper (1a, 1b) verbunden ist.

4. Kapazitiver Beschleunigungssensor nach einem der Ansprüche 1 bis 3, dadurch gekennzeichnet, daß die freitragende Struktur (2a, 2b) Durchbrüche (14) aufweist.

5. Kapazitiver Beschleunigungssensor nach einem der Ansprüche 1 bis 4, dadurch gekennzeichnet, daß die freitragende Struktur (2a, 2b) an der Oberkante einer Grube der zweiten Art (3b) an vier Stellen mit dem Halbleiterkörper (1a, 1b) verbunden ist.

6. Kapazitiver Beschleunigungssensor nach einem der Ansprüche 1 bis 5, dadurch gekennzeichnet, daß die Gruben erster (3a) und zweiter (3b) Art eine quaderförmige bzw shachtelförmige Gestalt aufweisen.

7. Kapazitiver Beschleunigungssensor nach einem der Ansprüche 1 bis 6, dadurch gekennzeichnet, daß die Halbleiterkörper (1a, 1b) aus Silizium bestehen.

8. Kapazitiver Beschleunigungssensor nach einem der Ansprüche 1 bis 7, dadurch gekennzeichnet, daß die beiden Halbleiterkörper (1a, 1b) mittels einer Schicht (4) miteinander verbunden sind, die mechanisch verbindet und elektrisch isoliert.

9. Kapazitiver Beschleunigungssensor nach Anspruch 8, dadurch gekennzeichnet, daß es sich bei der Schicht (4) zwischen den beiden Halbleiterkörpern (1a, 1b) um thermisch gewachsenes Oxyd handelt.

10. Kapazitiver Beschleunigungssensor nach Anspruch 8, dadurch gekennzeichnet, daß es sich bei der Schicht (4) zwischen den beiden Halbleiterkörpern (1a, 1b) um Silizium-Nitrid (Si₃N₄) handelt.

11. Kapazitiver Beschleunigungssensor nach einem der Ansprüche 1 bis 10, dadurch gekennzeichnet, daß die Halbleiterkörper (1a, 1b) eine n-Dotierung von 10¹⁷ cm⁻³ bis 10¹⁹ cm⁻³ aufweisen.

## Claims

1. Capacitive acceleration sensor (10) having a planar construction and including a moveable cantilevered structure (2) located in a cavity (13) for altering the capacitance, in particular for use in a vehicle, wherein the acceleration sensor (10) consists of two semiconductor bodies (1a, 1b), at least one of the two semiconductor bodies (1a, 1b) comprising a pit of a first type (3a), at least one of the semiconductor bodies (1a, 1b) comprising a pit of a second type (3b) and including a cantilevered structure (2) which is arranged to be moveable relative to the semiconductor body (1a, 1b) and the two semiconductor bodies (1a, 1b) being joined together over an extensive area and arranged in such a way that a pit of the first type (3a) in one of the semiconductor bodies (1a) and a pit of the second type (3b) in the other semiconductor body (1b) form a cavity (13) therebetween, characterised by the following features:
a) both semiconductor bodies (1a, 1b) comprise at least one pit of the first type (3a);
b) both semiconductor bodies (1a, 1b) comprise at least one pit of the second type (3b) in which the cantilevered structure (2a, 2b) is arranged and connected to the semiconductor body (1a, 1b) in such a way that it is freely moveable perpendicularly relative to the surface of the two semiconductor bodies (1a, 1b);
c) the pits of the first type (3a) are separated electrically from the pits of the second type (3b) in one of the two semiconductor bodies (1a, 1b) by means of a saw-cut (11).

2. Capacitive acceleration sensor in accordance with Claim 1, characterised in that, the cantilevered structure (2a, 2b) in a pit of the second type (3b) is located in the vicinity of the point of interconnection of the two semiconductor bodies (1a, 1b).

3. Capacitive acceleration sensor in accordance with Claim 2 or 3 [sic], characterised in that, the cantilevered structure (2a, 2b) is joined to the semiconductor body (1a, 1b) over an extensive area.

4. Capacitive acceleration sensor in accordance with any of the Claims 1 to 3, characterised in that, the cantilevered structure (2a, 2b) comprises cut-outs (14).

5. Capacitive acceleration sensor in accordance with any of the Claims 1 to 4, characterised in that, the cantilevered structure (2a, 2b) at the upper edge of a pit of the second type (3b) is joined to the semiconductor body (1a, 1b) at four points.

6. Capacitive acceleration sensor in accordance with any of the Claims 1 to 5, characterised in that, the pits of the first type (3a) and those of the second type (3b) have a cuboid or boxlike shape.

7. Capacitive acceleration sensor in accordance with any of the Claims 1 to 6, characterised in that, the semiconductor bodies (1a, 1b) consist of silicon.

8. Capacitive acceleration sensor in accordance with any of the Claims 1 to 7, characterised in that, the two semiconductor bodies (1a, 1b) are joined together by means of a layer (4) which joins them mechanically but isolates them electrically.

9. Capacitive acceleration sensor in accordance with Claim 8. characterised in that, the layer (4) between the two semiconductor bodies (1a, 1b) is a thermally grown oxide.

10. Capacitive acceleration sensor in accordance with Claim 8. characterised in that, the layer (4) between the two semiconductor bodies (1a, 1b) is silicon nitride (Si₃N₄).

11. Capacitive acceleration sensor in accordance with any of the Claims 1 to 10, characterised in that, the semiconductor bodies (1a, 1b) have an n-type doping of 10¹⁷ cm⁻³ to 10¹⁹ cm⁻³.

## Revendications

1. Capteur d'accélération capacitif (10) de construction plane et à structure mobile en porte-à-faux (2) disposée dans un espace creux (13), pour la modification de la capacité, en particulier pour emploi dans un véhicule, dans lequel le capteur d'accélération (10) est constitué de deux éléments de semi-conducteur (1a, 1b), au moins l'un des deux éléments de semi-conducteur (1a, 1b) présente une fosse d'un premier type (3a), au moins l'un des éléments de semi-conducteur (1a, 1b) présente une fosse d'un second type (3b), à structure en porte-à-faux (2) qui est disposée mobile par rapport à l'élément de semi-conducteur (1a, 1b) et deux éléments de semi-conducteur (1a, 1b) sont réunis l'un à l'autre par une surface plane et sont disposés de façon qu'une fosse du premier type (3) du premier élément à semi-conducteur (1a) et qu'une fosse du second type (3b) de l'autre élément de semi-conducteur (1b) forment ensemble un espace creux (13), caractérisé par les caractéristiques suivantes:
a) les deux éléments de semi-conducteur (1a, 1b) présentent au moins une fosse du premier type (3a);
b) les deux éléments de semi-conducteur (1a, 1b) présentent au moins une fosse du second type (3b) dans laquelle la structure en porte-à-faux (2a, 2b) est disposée, et reliée à l'élément de semi-conducteur (1a, 1b) de façon à se mouvoir librement perpendiculairement à la surface des deux éléments de semi-conducteur (1a, 1b) ;
c) dans l'un des deux éléments de semi-conducteur (1a, 1b), les fosses du premier type (3a) et les fosses du second type (3b) sont électriquement séparées l'une de l'autre au moyen d'un trait de scie (11).

2. Capteur d'accélération capacitif selon la revendication 1, caractérisé par le fait que la structure en porte-à-faux (2a, 2b) d'une fosse du second type (3b) est disposée au voisinage de la position de liaison des deux éléments de semi-conducteur (1a, 1b).

3. Capteur d'accélération capacitif selon la revendication 2 ou 3, caractérisé par le fait que la structure en porte-à-faux (2a, 2b) est reliée à l'élément de semi-conducteur (1a, 1b) en formant une surface plane.

4. Capteur d'accélération capacitif selon l'une des revendications 1 à 3, caractérisé par le fait que la structure en porte-à-faux (2a, 2b) présente des découpes (14).

5. Capteur d'accélération capacitif selon l'une des revendications 1 à 4, caractérisé par le fait que la structure en porte-à-faux (2a, 2b) est reliée à l'élément de semi-conducteur (1a, 1b) par le bord supérieur d'une fosse du second type (3b), en quatre endroits.

6. Capteur d'accélération capacitif selon l'une des revendications 1 à 5, caractérisé par le fait que les fosses du premier (3a ) et du second (3b) types présentent la forme d'un parallélépipède rectangle ou d'une boîte.

7. Capteur d'accélération capacitif selon l'une des revendications 1 à 6, caractérisé par le fait que les éléments de semi-conducteur (1a, 1b) sont constitués de silicium.

8. Capteur d'accélération capacitif selon l'une des revendications 1 à 7, caractérisé par le fait que les deux éléments de semi-conducteur (1a, 1b) sont reliés l'un à l'autre au moyen d'une couche (4) qui les relie mécaniquement et les isole électriquement.

9. Capteur d'accélération capacitif selon la revendication 8, caractérisé par le fait qu'en ce qui concerne la couche (4) entre les deux éléments de semi-conducteur (1a, 1b), il s'agit d'oxyde ayant crû par voie thermique.

10. Capteur d'accélération capacitif selon la revendication 8, caractérisé par le fait qu'en ce qui concerne la couche (4) entre les deux éléments de semi-conducteur (1a, 1b), il s'agit de nitrure de silicium (Si₃N₄)

11. Capteur d'accélération capacitif selon l'une des revendications 1 à 10, caractérisé par le fait que les éléments de semi-conducteur (1a, 1b) présentent un dopage N de 10¹⁷ cm⁻³ à 10¹⁹ cm⁻³.
